# EUROPÄISCHE PATENTSCHRIFT

(11) **EP 1 064 737 B1**
(45) Veröffentlichungstag und Bekanntmachung des Hinweises auf die Patenterteilung: **12.06.2002**
(21) Anmeldenummer: 99924692.9
(22) Anmeldetag: 25.03.1999
(51) Int. Cl.: H04B 7/26, H04Q 7/38

(54) **VERFAHREN UND ANORDNUNG ZUR KANALZUWEISUNG IN EINEM CDMA FUNK-KOMMUNIKATIONSSYSTEM**
METHOD AND DEVICE FOR ALLOCATING CHANNELS IN A CDMA RADIOCOMMUNICATIONS SYSTEM
PROCEDE ET DISPOSITIF POUR L'ATTRIBUTION DE CANAUX DANS UN SYSTEME DE RADIOCOMMUNICATION AMCR

(30) Priorität: 25.03.1998 DE 19813183
(43) Veröffentlichungstag der Anmeldung: 03.01.2001
(73) Patentinhaber: SIEMENS AKTIENGESELLSCHAFT, 80333 München (DE)
(72) Erfinder: BAHRENBURG, Stefan, D-81477 München (DE); BAIER, Paul, Walter, D-67661 Kaiserslautern (DE); EMMER, Dieter, D-82319 Starnberg (DE); MAYER, Jürgen, D-67105 Schifferstadt (DE); SCHLEE, Johannes, D-89134 Blaustein (DE); WEBER, Tobias, D-67731 Otterbach (DE)
(86) Internationale Anmeldenummer: DE9900917
(87) Internationale Veröffentlichungsnummer: WO9949684

(56) Entgegenhaltungen:
- EP-A- 0 655 845
- US-A- 4 763 322
- US-A- 5 742 593

## Beschreibung

Die Erfindung betrifft ein Verfahren und eine Anordnung zur Kanalzuweisung in einem Funk-Kommunikationssystem, insbesondere in einem Mobilfunksystem.

In Funk-Kommunikationssystemen werden Informationen wie beispielsweise Sprache, Bildinformationen oder andere Daten, mit Hilfe von elektromagnetischen Wellen über eine Funkschnittstelle zwischen einer sendenden und einer empfangenden Funkstation, wie beispielsweise einer Basisstation bzw. Funkstation, übertragen. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication), das unter anderem aus J. Biala "Mobilfunk und Intelligente Netze", Vieweg Verlag, 1995, bekannt ist, liegen die Trägerfrequenzen im Bereich von 900 MHz, 1800 MHz und 1900 MHz. Für zukünftige Mobilfunksysteme mit CDMA- oder TD/CDMA- Übertragungsverfahren über die Funkschnittstelle, wie beispielsweise das UMTS (Universal Mobile Telecommunication System) oder andere Systeme der 3. Generation sind Frequenzen im Frequenzband von ca. 2000 MHz vorgesehen.

Aus dem Artikel von J. Mayer, J. Schlee, T. Weber "Protocol and Signalling Aspects of Joint Detection CDMA", PIMRC'97, Helsinki, 1997, Seiten 867-871, ist bekannt, daß einer Kommunikationsverbindung durch ein Channel-Pooling jeweils ein oder mehrere Verkehrskanäle zugeteilt werden können, wobei jeder Verkehrskanal nach einem CDMA-Übertragungsverfahren durch einen individuellen CDMA-Kode unterscheidbar ist. Das Verfahren des Channel-Poolings wird vorteilhaft eingesetzt, um Kommunikationsverbindungen zu bzw. von Funkstationen mit unterschiedlichen Datenraten realisieren oder auf einer Kommunikationsverbindung mehrere Dienste parallel betreiben zu können. Ein Verkehrskanal, der in der weiteren Beschreibung vereinfacht als Kanal bezeichnet wird, ist dabei als eine Kombination aus einem Frequenzkanal, einem Zeitschlitz und einem CDMA-Kode definiert. Anstelle eines fest zugeordneten Frequenzkanals, Zeitschlitzes und CDMA-Kodes kann alternativ auch jeweils eine Frequenzsprungsequenz, Zeitschlitzsprungsequenz bzw. CDMA-Kode-Sprungsequenz verwendet werden.

In den bekannten Mobilfunksystemen, wie beispielsweise dem GSM, enhalten Signalisierungs-Nachrichten, die bei einem Verbindungsaufbau oder bei einem Handover verwendet werden, Informationselemente, die den jeweils zuzuweisenden Kanal für die Übertragung von Nutzdaten spezifizieren. Die Verbindungsaufbau- und Handover-Prozeduren in dem GSM-Mobilfunksystem sind unter anderem auf den Seiten 173-185 des Standes der Technik gemäß J. Biala offenbart. Für jeden zu bezeichnenden Kanal ist nach diesem System ein eigenes Informationselement vorgesehen. Bei einer Nutzung des Channel-Poolings in einem TD/CDMA-Mobilfunksystem können einer Funkstation mehrere Kanäle zugewiesen werden, wobei in der Aufwärtsrichtung von der Funkstation zu der Basisstation zusätzlich noch jeweils ein Mittambelkode mitgeteilt werden muß. Der Einsatz des aus dem GSM-Mobilfunksystem bekannten Verfahrens der Kanalzuweisung mit einem Informationselement für jeden zuzuweisenden Kanal hätte in einem TD/CDMA-Mobilfunksystem zur Folge, daß ein sehr hoher Signalisierungsaufwand auftritt, der nachteilig die Übertragungskapazität und die Flexibilität des Mobilfunksystems einschränkt.

Aus der US 4 763 322 ist ein Verfahren in einem zellularen Mobilfunksystem bekannt, bei dem Mobilstationen in Abhängigkeit von einem jeweiligen Bandbreitenbedarf Zeitschlitze mit einer unterschiedlichen Dauer zugewiesen werden.

Der Erfindung liegt die Aufgabe zugrunde, ein Verfahren anzugeben, das eine Zuweisung mehrerer Kanäle bei einer Vermeidung eines großen Signalisierungsaufwands ermöglicht. Diese Aufgabe wird durch das Verfahren nach den Merkmalen der unabhängigen Patentansprüche 1 und 2 gelöst. Weiterbildungen der Erfindung sind den Unteransprüchen zu entnehmen.

In dem Verfahren gemäß dem unabhängigen Patentanspruch 1 zur Kanalzuweisung in einem Funk-Kommunikationssystem, das ein TD/CDMA-Teilnehmerseparierungsverfahren nutzt, wird einer Funkstation in einer Signalisierungs-Nachricht die Zuweisung von zumindest einem Kanal aus einer Summe von verfügbaren Kanälen durch ein Informationselement signalisiert. In dem Informationselement wird zumindest ein Zeitschlitz aus einer festgelegten Summe von Zeitschlitzen durch ein Zeitschlitzauswahl-Sub-Informationselement ausgewählt. Nachfolgend wird in dem Informationselement zumindest ein CDMA-Kode aus einer festgelegten Summe von CDMA-Kodes durch ein Kodeauswahl-Sub-Informationselement für jeden ausgewählten Zeitschlitz ausgewählt, wobei die Anzahl der Kodeauswahl-Sub-Infomationselemente zur Auswahl der CDMA-Kodes der Anzahl der ausgewählten Zeitschlitze entspricht.

Dieses Verfahren gemäß dem Patentanspruch 1 besitzt gegenüber dem Stand der Technik den Vorteil, daß der Funkstation durch ein einziges Informationselement in einer Signalisierungs-Nachricht ein oder mehrere Kanäle in einem oder mehreren Zeitschlitzen zugewiesen werden können. Die Anzahl der für die Auswahl der Zeitschlitze und der CDMA-Kodes benötigten Sub-Informationselemente in dem Informationselement wird vorteilhaft dadurch verringert, daß die Zuweisung der Kanäle abwärtshierarchisch in der Weise erfolgt, daß zuerst zumindest ein Zeitschlitz ausgewählt wird und anschließend für jeden Zeitschlitz zumindest ein CDMA-Kode ausgewählt wird. Durch die Rückbeziehung auf den jeweiligen Zeitschlitz bei der Auswahl der CDMA-Kodes müssen die ausgewählten Zeitschlitze nur in einem Sub-Informationselement definiert werden. Dabei wird weiterhin vorteilhaft eine große Flexibilität bei der Auswahl der CDMA-Kodes in den Zeitschlitzen sichergestellt, so daß beispielsweise die Anzahl der ausgewählten CDMA-Kodes in den jeweiligen Zeitschlitzen variieren kann.

In dem Verfahren gemäß dem unabhängigen Patentanspruch 2 zur Kanalzuweisung in einem Funk-Kommunikationssystem, das ein TD/CDMA-Teilnehmerseparierungsverfahren nutzt, wird einer Funkstation in einer Signalisierungs-Nachricht die Zuweisung von zumindest einem Kanal aus einer Summe von verfügbaren Kanälen durch ein Informationselement signalisiert. In dem Informationselement wird zumindest ein CDMA-Kode aus einer festgelegten Summe von CDMA-Kodes durch ein Kodeauswahl-Sub-Informationselement ausgewählt. Nachfolgend wird in dem Informationselement zumindest ein Zeitschlitz aus einer festgelegten Summe von Zeitschlitzen durch ein Zeitschlitzauswahl-Sub-Informationselement ausgewählt, wobei die ausgewählten CDMA-Kodes in jedem ausgewählten Zeitschlitz benutzt werden.

Dieses Verfahren gemäß dem Patentanspruch 2 besitzt den Vorteil, daß durch die hierarchische Struktur, bei der ein oder mehrere CDMA-Kodes und anschließend ein oder mehrere Zeitschlitze ausgewählt werden, die Anzahl der Sub-Informationselemente minimiert wird. Durch die Nutzung der gleichen CDMA-Kodes in mehreren Zeitschlitzen ist nur jeweils ein einziges Kodeauswahl- und Zeitschlitzauswahl-Sub-Informationselement für die Kanalzuweisung notwendig.

Gemäß einer ersten Weiterbildung der Erfindung wird in dem Informationselement zusätzlich ein Frequenzkanal für die Aufwärts- bzw. Abwärtsrichtung aus einer Summe von Frequenzkanälen durch ein Frequenzkanalauswahl-Sub-Informationselement ausgewählt, wobei die Auswahl der Zeitschlitze auf den ausgewählten Frequenzkanal bezogen ist.

Bezugnehmend auf die erste Weiterbildung der Erfindung wird gemäß einer zweiten Weiterbildung der Funkstation in der Signalisierungs-Nachricht die Zuweisung zusätzlicher Kanäle in zumindest einem weiteren Frequenzkanal durch ein zusätzliches Informationselement für jeden zusätzlichen Frequenzkanal signalisiert, wobei der Aufbau des zusätzlichen Informationselementes dem des Informationselementes entspricht.

Dieses Merkmal ermöglicht vorteilhaft, daß einer Funkstation, die aufgrund ihrer technischen Ausgestaltung in der Lage ist, auf mehreren Frequenzkanälen zu senden bzw. zu empfangen, in einer Signalisierungs-Nachricht Kanäle in mehreren Frequenzkanälen zugewiesen werden können. Dabei erfolgt die Zuweisung wiederum in der Weise, daß für jeden Frequenzkanal ein Informationselement bzw. zusätzliches Informationselement vorgesehen wird.

Einer weiteren Weiterbildung zufolge wird in dem Informationselement die Summe der Zeitschlitze durch ein SummeZeitschlitze-Sub-Informationselement und/oder die Summe der CDMA-Kodes für einen Zeitschlitz durch ein SummeKodes-Sub-Informationselement angegeben. Durch diese Ausprägung kann die Anzahl der Zeitschlitze und/oder die Anzahl der CDMA-Kodes pro Zeitschlitz sehr flexibel auf die Anforderungen beipielsweise in Bezug auf die Übertragungskapazität eines Kanals angepaßt werden.

Gemäß einer weiteren Weiterbildung der Erfindung wird in dem Informationselement die Summe der Mittambeln für die Aufwärtsrichtung durch ein SummeMittambeln-Sub-Informationselement angegeben, und nachfolgend für jeden ausgewählten Zeitschlitz eine Mittambel aus der Summe der Mittambeln durch jeweils ein AuswahlMittambel-Sub-Informationselement ausgewählt. Vorteilhaft wird bei dieser Ausgestaltung nach einer allgemeinen Festlegung der Anzahl der Mittambeln, die beispielsweise pro Frequenzkanal verwendet wird, in jedem Zeitschlitz, in dem CDMA-Kodes für die Funkstation ausgewählt wurden, nur eine gemeinsame Mittambel für alle Kanäle verwendet. Dadurch wird der Signalisierungsaufwand bei der Zuteilung der Mittambeln vorteilhaft verringert und die Signalverarbeitung sowohl in der Funkstation als auch in der Basisstation erleichtert.

Gemäß einer weiteren Weiterbildung der Erfindung wird von der Funkstation aus einer Länge des Informationselementes die Anzahl der zuzuweisenden Kanäle ermittelt. Dabei ist die Funkstation in der Lage, aus der Länge des Sub-Informationselemente in dem Informationselement die Anzahl der ihr zuzuteilenden Kanäle zu ermitteln.

Bezugnehmend auf die vorstehende Weiterbildung wird der Funkstation gemäß einer weiteren Weiterbildung die Länge des Informationselementes durch ein Längenfeld mitgeteilt, wodurch der Funkstation die gesamte Länge des Informationselementes bereits vor dem Beginn der Kanalzuweisung bekannt gemacht wird. Dieses dient vorteilhaft der schnelleren Verarbeitung der in dem Informationselement enthaltenen Informationen durch die Funkstation.

Gemäß einer weiteren Weiterbildung der Erfindung werden der Funkstation die Kanäle für die Aufwärtsrichtung und für die Abwärtsrichtung unabhängig voneinander in der Signalisierungs-Nachricht zugewiesen. Durch diese Ausgestaltung können vorteilhaft asymmetrische Datenraten für die Aufwärts- und Abwärtsrichtung durch die Zuweisung einer jeweils unterschiedlichen Anzahl von Kanälen erreicht werden.

Ein Ausführungsbeispiel der Erfindung ist in den nachfolgenden Zeichnungen dargestellt. Dabei zeigen:
- FIG 1: ein Blockschaltbild eines Funk-Kommunikationssystems, insbesondere eines Mobilfunksystems,
- FIG 2: eine schematische Darstellung der Rahmenstruktur der Funkschnittstelle und des Aufbaus eines Funkblocks,
- FIG 3: eine Signalisierungsabfolge der Zuweisung von Kanälen zu einer Funkstation,
- FIG 4: die Struktur einer Signalisierungs-Nachricht AC mit Informationselementen,
- FIG 5: die Struktur eines Informationselementes DCD/Additional DCD,
- FIG 6: die Struktur eines Informationselementes UCD/Additional UCD,
- FIG 7: die Zuweisung von Kanälen durch Sub-Informationselemente,
- FIG 8: die Struktur eines Informationselementes DCD/Additional DCD,
- FIG 9: die Struktur eines Informationselementes UCD/Additional UCD, und
- FIG 10: die Zuweisung von Kanälen durch Sub-Informationselemente.

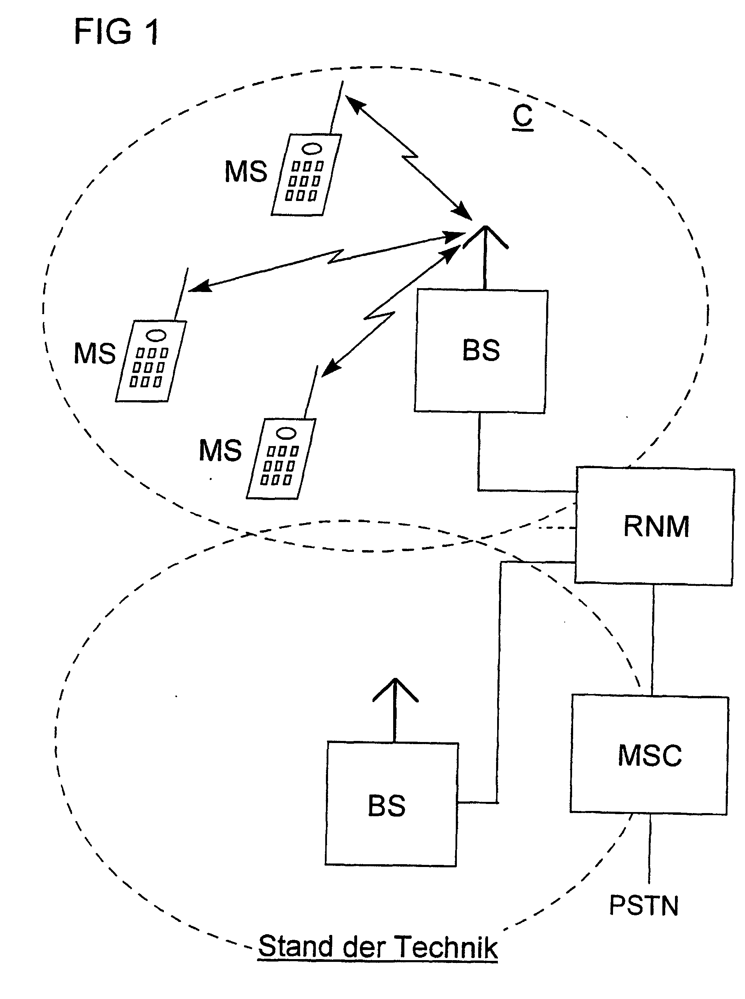

Das in FIG 1 dargestellte und als ein Mobilfunksystem ausgeführte Funk-Kommunikationssystem besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS ist eine Funkstation, die über eine Funkschnittstelle Verbindungen zu weiteren Funkstationen, wie beispielsweise Funkstationen MS oder anderweitigen mobilen und stationären Endgeräten, aufbauen kann. Durch jede Basisstation wird zumindest eine Funkzelle C gebildet. Bei einer Sektorisierung oder bei hierarchischen Zellstrukturen werden pro Basisstation BS auch mehrere Funkzellen C versorgt.

Die Funktionalität dieser Struktur wird von dem Funk-Kommunikationssystem nach der Erfindung genutzt; sie ist jedoch auch auf andere Funk-Kommunikationssysteme, wie beispielsweise Teilnehmerzugangsnetze mit drahtlosen Teilnehmeranschlüssen, übertragbar, in denen die Erfindung zum Einsatz kommen kann.

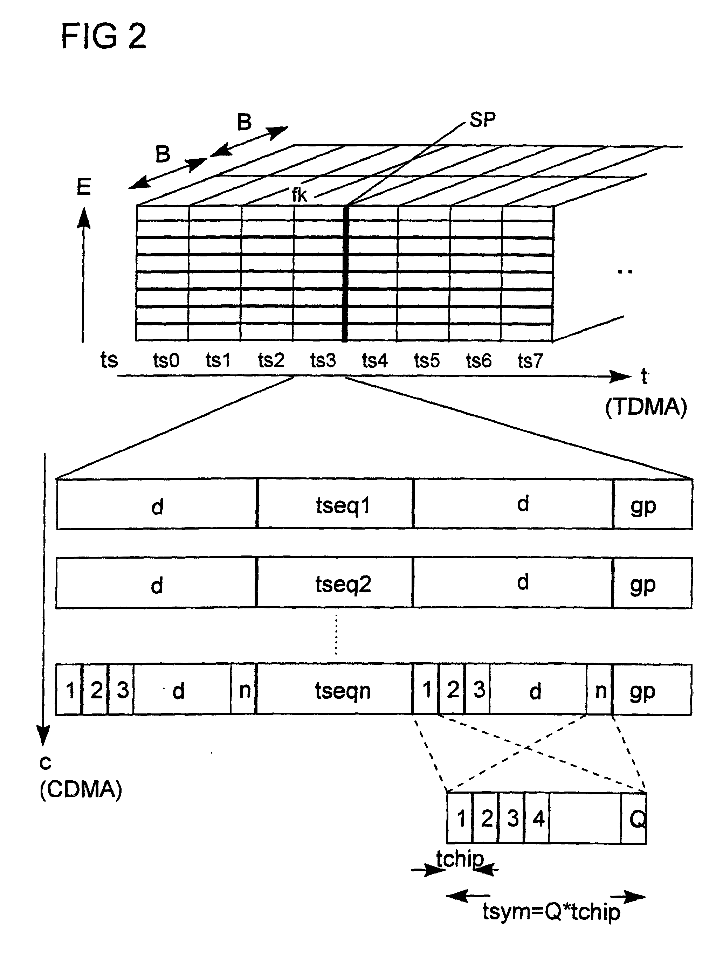

Die Rahmenstruktur der Funkschnittstelle ist aus der FIG 2 ersichtlich. Gemäß einer TDMA-Komponente ist eine Aufteilung eines breitbandigen Frequenzbereiches, beispielsweise der Bandbreite B = 1,2 MHz, in mehrere Zeitschlitze ts, beispielsweise 8 Zeitschlitze ts0 bis ts7 vorgesehen. Jeder Zeitschlitz ts innerhalb des Frequenzbereiches B bildet einen Frequenzkanal fk. Innerhalb eines breitbandigen Frequenzbereiches B werden die aufeinanderfolgenden Zeitschlitze ts nach einer Rahmenstruktur gegliedert. So werden acht Zeitschlitze ts0 bis ts7 zu einem Rahmen zusammengefaßt.

Bei einer Nutzung eines TDD-Übertragungsverfahrens wird ein Teil der Zeitschlitze ts1 bis ts7 in Aufwärtsrichtung und ein Teil der Zeitschlitze ts0 bis ts7 in Abwärtsrichtung benutzt, wobei die Übertragung in Aufwärtsrichtung beispielsweise vor der Übertragung in Abwärtsrichtung erfolgt. Dazwischen liegt ein Umschaltzeitpunkt SP. Ein Frequenzkanal fk für die Aufwärtsrichtung entspricht in diesem Fall dem Frequenzkanal fk für die Abwärtsrichtung. In gleicher Weise sind die weiteren Frequenzkanäle fk strukturiert.

Innerhalb der Frequenzkanäle fk, die zur Nutzdatenübertragung vorgesehen sind, werden Informationen mehrerer Verbindungen in Funkblöcken übertragen. Diese Funkblöcke zur Nutzdatenübertragung bestehen aus Abschnitten mit Daten d, in denen jeweils Abschnitte mit empfangsseitig bekannten Trainingssequenzen tseq1 bis tseqn eingebettet sind. Die Daten d sind verbindungsindividuell mit einer Feinstruktur, einem Spreizkode c (CDMA-Kode), gespreizt, so daß empfangsseitig beispielsweise n Verbindungen durch diese CDMA-Komponente separierbar sind.

Die Spreizung von einzelnen Symbolen der Daten d mit Q Chips bewirkt, daß innerhalb der Symboldauer tsym Q Subabschnitte der Dauer tchip übertragen werden. Die Q Chips bilden dabei den individuellen CDMA-Kode c. Weiterhin ist innerhalb des Zeitschlitzes ts eine Schutzzeit gp zur Kompensation unterschiedlicher Signalaufzeiten der Verbindungen aufeinanderfolgender Zeitschlitze ts vorgesehen.

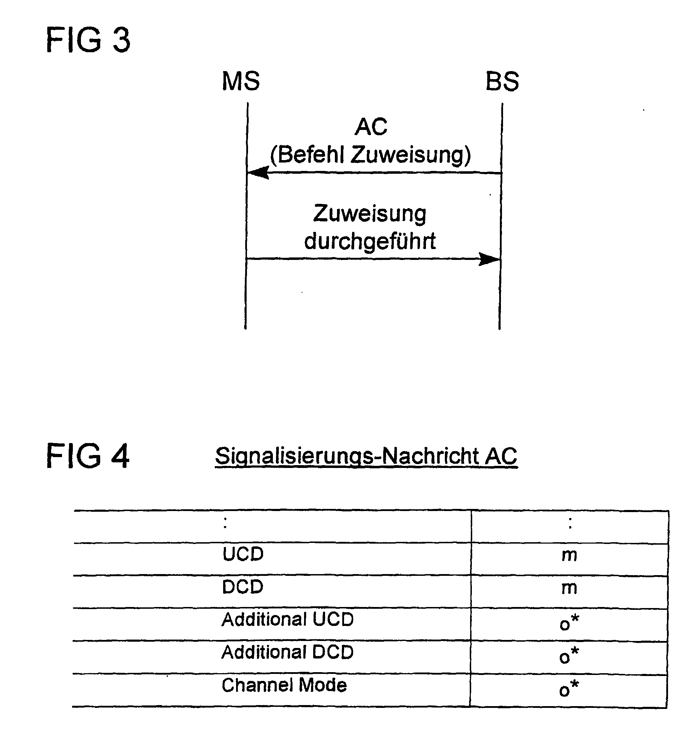

Die FIG 3 zeigt eine Signalsierungsabfolge für eine erfolgreiche Zuweisung von Kanälen zu einer Funkstation MS, die sich in dem Bereich der funktechnischen Abdeckung durch eine Basisstation BS befindet. Dabei sind nur die Erweiterungen gegenüber dem bekannten Algorithmus aus dem GSM-Mobilfunksystem dargestellt.

Die Durchführung der Zuweisung von Kanälen zu der Funkstation MS geschieht basierend auf dem GSM-Mobilfunksystem in der Weise, daß die Basisstation BS die Signalisierungs-Nachricht AC ("Befehl Zuweisung" - Access Command) zu der Funkstation MS überträgt, in der diese aufgefordert wird, die spezifizierten Kanäle für die Übertragung von Nutzinformationen zu verwenden. Die Funkstation MS bestätigt die erfolgreiche Durchführung der Zuweisung mit der Signalisierungs-Nachricht "Zuweisung durchgeführt".

Die FIG 4 zeigt die Struktur der Signalisierungs-Nachricht AC in Form einer Tabelle. Neben weiteren, in der Tabelle nicht aufgeführten Informationselementen besteht die Signalisierungs-Nachricht AC aus Informationselementen wie dem UCD (Uplink Channel Descriptor) und dem DCD (Downlink Channel Descriptor). Diese Informationselemente sind verbindlich (mandatory) und aufgrund dieser Tatsache in der rechten Spalte der Tabelle mit einem m gekennzeichnet. Optional können zu diesen Informationselementen UCD und DCD weitere Informationselemente wie beispielsweise Additional UCD (Additional Uplink Channel Descriptor) und Additional DCD (Additional Downlink Channel Descriptor) oder Channel Mode hinzukommen. Diese optionalen Informationselemente sind in der rechten Spalte mit einem "o" gekennzeichnet, wobei die Kennzeichnung "*" aussagt, daß diese Informationselemente auch mehrmals in der Signalisierungs-Nachricht AC vertreten sein können. Beispielsweise wird die Signalisierungs-Nachricht AC für jeden Frequenzkanal fk, der zusätzlich der Funkstation MS zugewiesen werden soll, um ein entsprechendes zusätzliches Informationselement Additional UCD bzw. Additional DCD erweitert.

Das Informationselement UCD gibt an, welche Kanäle in einem spezifizierten Frequenzkanal fk in der Aufwärtsrichtung verwendet werden sollen. Soll die Funkstation MS mehrere Frequenzkanäle fk in der Aufwärtsrichtung benutzen, so enthält die Signalisierungs-Nachricht jeweils ein zusätzliches Informationselement Additional UCD für jeden weiteren spezifizierten Frequenzkanal fk. Analog dazu wird für die Zuweisung von Kanälen für die Abwärtsrichtung durch die Informationselemente DCD und Additional DCD verfahren, wobei die jeweilige Anzahl der Frequenzkanäle fk in der Auf- und Abwärtsrichtung unterschiedich sein kann.

Um in einem TD/CDMA-Funk-Kommunikationssystem die verwendeten Kanäle zu spezifizieren, wobei die Möglichkeit des Channel-Poolings und einer asymmetrischen Anzahl von Kanälen für die Aufwärts- und Abwärtsrichtung gegeben sein soll, wird es erforderlich, die in der Signalisierungs-Nachricht AC enthaltenen Informationselemente UCD bzw. DCD entsprechend auszugestalten. Um beispielsweise einen Kanal für die Aufwärtsrichtung zu spezifizieren, sind folgende Informationen erforderlich:
- Frequenzkanal bzw. Frequenzsprungsequenz,
- Zeitschlitz bzw. Zeitschlitzsprungsequenz,
- CDMA-Kode bzw. Kodesprungsequenz,
- Mittambelkode, und
- Trägerdienst (Modulationsart und Interleavingart).

Weiterhin kann für den Entwurf der Struktur der Signalisierungs-Nachricht AC vorteilhaft die Tatsache genutzt werden, daß bei einer Zuweisung von mehreren Kanälen in der Aufwärtsund/oder in der Abwärtsrichtung, diese Kanäle zumeist in einem gemeinsamen Zeitschlitz ts eines Frequenzkanals fk enthalten sind, um die Signalverarbeitung in der Empfangseinrichtung der Funkstation MS mit einem geringeren Rechenaufwand durchführen zu können, und gleichsam die Empfangs- wie auch Sendeeinrichtung nur für die Dauer eines Zeitschlitzes ts aktivieren zu müssen. Nur für den Fall, daß ein Zeitschlitz ts nicht ausreicht, werden Kanäle in mehreren Zeitschlitzen ts zugewiesen, die jedoch vorteilhaft in einem Frequenzkanal fk liegen.

Die Funkstation MS besitzt zum Zeitpunkt des Empfangs der Signalisierungs-Nachricht AC durch vorausgegangene Signalisierungen Informationen darüber, welche
- Frequenzkanäle bzw. Frequenzsprungfolgen,
- Zeitschlitze bzw. Zeitschlitzsprungfolgen,
- CDMA-Kode-Familie und ggf. welche CDMA-Kode-Sprungfolge, und
- Mittambelkodes in der Aufwärtsrichtung
in der Funkzelle C, in der sie sich gerade aufhält, verwendet werden können. Basierend auf diesen Parametern wird ein Kanal in der Aufwärtsrichtung durch vier Angaben und ein Kanal in Abwärtsrichtung durch drei Angaben - der Mittambelkode ist in Abwärtsrichtung a'priori bekannt - definiert.

Nach einer aus dem GSM-Mobilfunksystem bekannten Spezifikation kann ein Informationselement beispielsweise aus drei Feldern bestehen, einem Typfeld T, einem Längenfeld L und einem Wertefeld W. Das Typfeld T wird verwendet, wenn das Informationselement optional oder konditional ist. Es dient dazu, das Informationselement zu benennen und wird bei verbindlichen Informationselementen nicht benötigt, da diese bereits durch ihre Lage in der Signalisierungs-Nachricht AC identifizierbar sind. Das Längenfeld L wird benötigt, wenn die Länge l der Sub-Informationselemente in dem Wertefeld W nicht a'priori bekannt ist. Das Längenfeld ist beispielsweise 8 bit lang besitzt als Inhalt die Anzahl der Oktette, aus denen das Wertefeld W besteht.

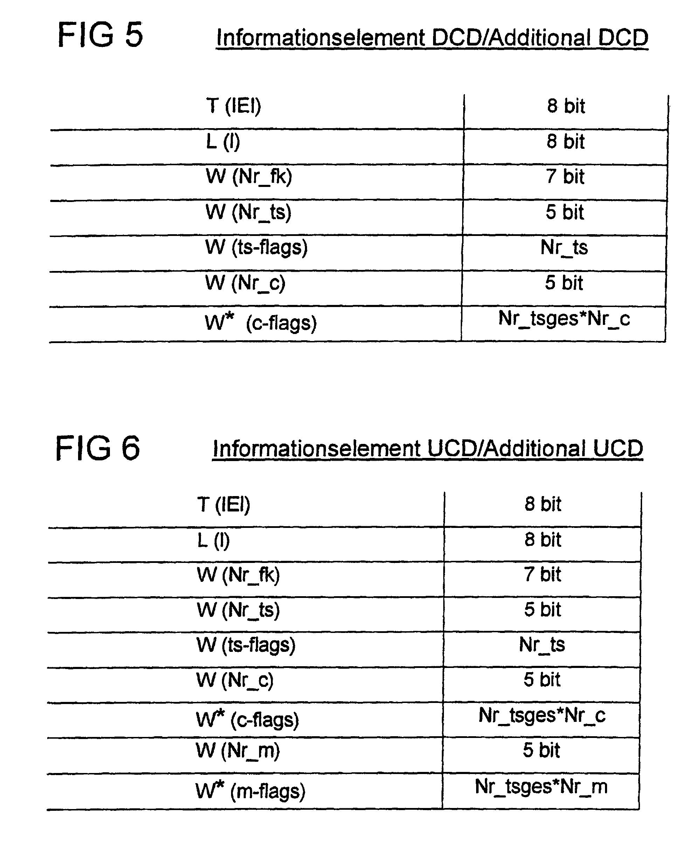

Die in den FIG 5 und 6 beispielhaft dargestellten Informationselemente DCD bzw. UCD besitzen jeweils das Format T-L-W, die den drei oben genannten Feldtypen entsprechen. Die Informationselemente DCD bzw. UCD sind in der angegebenen Form als verpflichtende Informationselemente und in der identischen Form als Additional DCD und Additional UCD als optionale Informationselemente in einer Signalisierungs-Nachricht AD einsetzbar. Soll das Informationselement DCD bzw. UCD als ein verpflichtendes Informationselement verwendet werden, so kann das Format auf die Form L-W durch ein Weglassen des Typfeldes T reduziert werden. Das Wertefeld W ist jeweils aus mehreren Sub-Informationselementen zusammengesetzt. Die Längen der jeweiligen Felder bzw. Sub-Informationselemente in dem jeweilgen Informationselement DCD bzw. UCD sind in bit in der rechten Spalte der Tabelle angegeben.

Die FIG 5 stellt beispielhaft die Struktur des Informationselementes DCD bzw. Additional DCD in Form einer Tabelle dar. Das Informationselement DCD bzw. Additional DCD wird verwendet, um für einen auswählbaren Frequenzkanal fk eine Untermenge aus der Summe möglicher Kanäle für die Abwärtsrichtung von der Basisstation BS zu der Funkstation MS auszuwählen. Für diese Auswahl wird vorausgesetzt, daß
- der Funkstation MS die in der Funkzelle, in der sie sich gerade befindet, verwendeten Frequenzkanäle fk bzw. Frequenzsprungsequenzen bekannt sind, wobei beispielhaft maximal 2⁷ = 128 Frequenzkanäle fk bzw. Frequenzsprungsequenzen verwendet werden,
- in der Funkzelle beispielhaft maximal 2⁵ = 32 Zeitschlitze ts bzw. Zeitschlitzsprungsequenzen verwendet werden, die der Funkstation MS bereits bekannt sind, und
- der Funkstation MS der Mittambelgrundkode bekannt ist.

In der ersten Zeile des Infomationselementes DCD ist das Typfeld T, in der zweiten Zeile das Längenfeld L und in den weiteren Zeilen die Sub-Informationselemente des Wertefeldes W angegeben. In der rechten Spalte der Tabelle ist die Länge in bit des jeweiligen Feldes bzw. Sub-Informationselementes angegeben. Die Kennzeichnung eines Sub-Informationselementes mit einem "*" bedeutet, daß dieses Sub-Informationselement mehrmals auftreten kann.

In der ersten Zeile des Wertefeldes W ist das Frequenzkanalauswahl-Sub-Informationselement Nr_fk mit einer Länge von 7 bit eingetragen, das einen von den möglichen 128 Frequenzkanälen fk auswählt. Alle weiteren nachfolgenden Sub-Informationselemente des Wertefeldes W beziehen sich jeweils auf diesen ausgewählten Frequenzkanal fk. Das SummeZeitschlitze-Sub-Informationselement Nr_ts in der zweiten Zeile des Wertefeldes W gibt an, in wieviele Zeitschlitzen ts bzw. Zeitschlitzsprungsequenzen der zuvor spezifizierte Frequenzkanal fk unterteilt ist. Die Länge des SummeZeitschlitze-Sub-Informationselementes Nr_ts von 5 bit erlaubt es, eine maximale Anzahl von 2⁵ = 32 Zeitschlitzen ts auszuweisen.

In der dritten Zeile des Wertefeldes W ist das Zeitschlitzauswahl-Sub-Informationselement ts-flags angegeben. Jedem existierenden Zeitschlitz ts ist eine Marke (flag) zugeordnet, die gesetzt wird, wenn der jeweilige Zeitschlitz ts ausgewählt wird. Die Länge des Zeitschlitzauswahl-Sub-Informationselementes ts-flags in bit entspricht somit der Anzahl der Zeitschlitze ts und wird daher dem SummeZeitschlitze-Sub-Informationselement Nr_ts entnommen. Die Gesamtanzahl der durch das Zeitschlitzauswahl-Sub-Informationselement ts-flags gesetzten Marken wird in der weiteren Beschreibung mit der Variablen Nr_tsges bezeichnet.

Das SummeKodes-Sub-Informationselement Nr_c in der vierten Zeile des Wertefeldes W gibt an, wieviele CDMA-Kodes c bzw. disjunktive CDMA-Kode-Sprungsequenzen innerhalb eines Zeitschlitzes ts existieren. Die Länge des Nr_c von 5 bit ermöglicht, eine maximale Anzahl von 2⁵ = 32 CDMA-Kodes c auszuweisen.

Abgeschlossen wird das Wertefeld W von einem oder mehreren Kodeauswahl-Sub-Informationselementen c-flags. Diese Kodeauswahl-Sub-Informationselemente c-flags enthalten für jeden innerhalb eines Zeitschlitzes ts definierten CDMA-Kode c genau eine Marke, welche gesetzt werden kann, um einen Kode c auszuwählen. Die Länge des Kodeauswahl-Sub-Informationselementes c-flags in bit entspricht der Anzahl CDMA-Kodes c pro Zeitschlitz ts, die aus der Nr_c bekannt ist. Das Kodeauswahl-Sub-Informationselement c-flags existiert jeweils für jeden ausgewählten Zeitschlitz ts. Aus diesem Grund entspricht die Gesamtanzahl an bits für die Kodeauswahl-Sub-Informationselemente c-flags der Anzahl Nr_c multipliziert mit der Gesamtzahl Nr_tsges der ausgewählten Zeitschlitze ts.

Bei der Spezifikation eines Kanals in der Abwärtsrichtung kann im Gegensatz zur Spezifikation eines Kanals in Aufwärtsrichtung auf die Angabe der Mittambel verzichtet werden, da die Basisstation BS für alle Kanäle in Abwärtsrichtung die gleiche Mittambel verwendet.

In der FIG 6 ist die Struktur des Informationselements UCD bzw. Additional UCD dargestellt. Das Informationselement UCD wird verwendet, um für einen auswählbaren Frequenzkanal fk eine Untermenge der Summe Kanäle für die Aufwärtsrichtung von der Funkstation MS zu der Basisstation BS auszuwählen. Für diese Auswahl wird vorausgesetzt, daß
- der Funkstation MS die in der Funkzelle, in der sie sich gerade befindet, verwendeten Frequenzkanäle fk bzw. Frequenzsprungsequenzen bekannt sind, wobei maximal 2⁷ = 128 Frequenzkanäle fk bzw. Frequenzsprungsequenzen verwendet werden,
- in der Funkzelle maximal 2⁵ = 32 Zeitschlitze ts bzw. Zeitschlitzsprungsequenzen verwendet werden, die der Funkstation MS bereits bekannt sind,
- der Funkstation MS der Mittambelgrundkode bekannt ist, und
- der Funkstation MS bekannt ist, wie die maximal 2⁵ = 32 Mittambelkodes aus dem Mittambelgrundkode ermittelt werden.

Das Informationselement UCD ist identisch dem Informationselement DCD aufgebaut, wobei das Wertefeld W zusätzlich um ein SummeMittambeln-Sub-Informationselement Nr_m und ein Mittambelauswahl-Sub-Informationselement m-flags erweitert wird. Das SummeMittambeln-Sub-Informationselement Nr_m bezeichnet die Anzahl der Mittambelkodes m. Analog zu dem Kanalauswahl-Sub-Informationselement c-flags ist für jeden ausgewählten Zeitschlitz ts ein Mittambelauswahl-Sub-Informationselement m-flags vorgesehen, woraus folgt, daß das Informationselement UCD Nr_tsges- Sub-Informationselemente des Types m-flags beinhaltet.

Bei einer Verwendung nur jeweils eines Trägerdienstes in einem Zeitschlitz ist der Einsatz einer einzigen Mittambel m für den jeweiligen Zeitschlitz ts möglich, wodurch vorteilhaft der Signalisierungsaufwand verringert wird. Für eine Auswahl jeweils einer Mittambel m für jeden Kanal in einem Zeitschlitz ts, beispielsweise bei einer Nutzung mehrerer Trägerdienste innerhalb eines Zeitschlitzes ts, kann das Informationselement UCD durch zusätzliche Mittambelauswahl-Sub-Informationselemente m-flags, die sich neben dem ausgewählten Zeitschlitz ts jeweils zusätzlich auf einen darin ausgewählten CDMA-Kode c beziehen, erweitert werden.

Bei einem Einsatz der Erfindung in einem TDD-System, bei dem Informationen in Aufwärts- und Abwärtsrichtung wie in der FIG 2 dargestellt in dem gleichen Frequenzkanal fk übertragen werden, könnte die Auswahl eines Frequenzkanals fk gemeinsam für die Abwärts- und Aufwärtsrichtung durch beispielsweise ein weiteres Informationselement in der Signalisierungs-Nachricht erfolgen, wobei sich die darauffolgende Auswahl der Zeitschlitze ts und CDMA-Kodes c auf diese Auswahl zentral rückbeziehen kann.

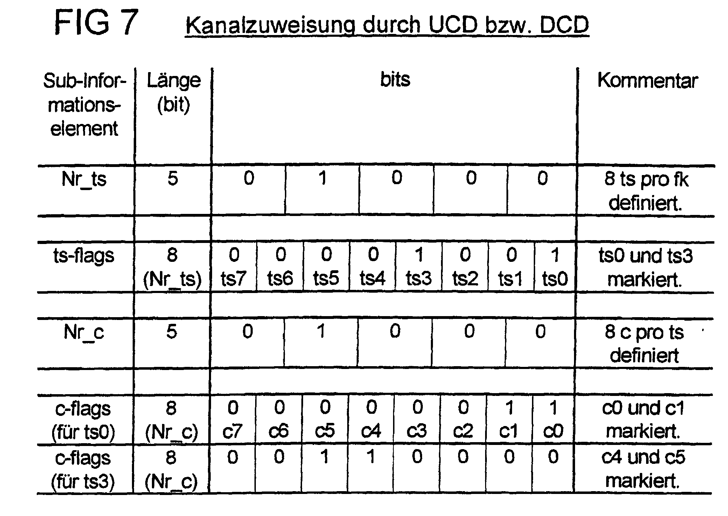

In der FIG 7 ist beispielhaft die Abfolge einer Kanalzuweisung für die Abwärts- bzw. Aufwärtsrichtung durch die einzelnen Sub-Informationselemente in einer Tabelle dargestellt. In der ersten, linken Spalte der Tabelle sind die Bezeichnungen der jeweiligen Sub-Informationselemente aufgeführt. Die zweite Spalte beinhaltet die Länge des jeweiligen Sub-Informationselementes in bit. In der dritten Spalte sind beispielhafte Werte für Bitfolgen eingetragen, die für die Auswahl bzw. die Markierung der Zeitschlitze ts0 bis ts7 und der CDMA-Kodes c0 bis c7 verwendet werden. Die rechte Spalte beinhaltet Kommentare zum besseren Verständnis der Tabelle.

In der ersten Zeile der Tabelle wird durch das SummeZeitschlitze-Sub-Informationselement Nr_ts die Anzahl der Zeitschlitze ts für einen vorangehend ausgewählten Frequenzkanal fk bestimmt. Der binäre Wert der dargestellten Bitfolge ergibt eine Anzahl von 8 Zeitschlitzen ts0 bis ts7 pro Frequenzkanal fk. In der zweiten Zeile werden durch die beispielhaft angegebene Bitfolge des Zeitschlitzauswahl-Sub-Informationselementes ts-flags in den entsprechend aufgelisteten Zeitschlitzen ts0 bis ts7 die Zeitschlitze ts0 und ts3 markiert und ausgewählt, wobei eine Markierung jeweils durch eine binäre 1 erfolgt.

In der dritten Zeile der Tabelle der FIG 7 wird durch das SummeKodes-Sub-Informationselement Nr_c die Anzahl der verwendbaren CDMA-Kodes c in den Zeitschlitzen ts definiert. Die beispielhaft angegebene Bitfolge ergibt eine Anzahl von 8 CDMA-Kodes c0 bis c7 pro Zeitschlitz ts. In den darauffolgenden Zeilen vier und fünf werden nun für die in der zweiten Zeile ausgewählten Zeitschlitze ts0 und ts3 durch die entsprechenden Bitfolgen die CDMA-Kanäle C0 und C1 in dem Zeitschlitz ts0 bzw. die CDMA-Kanäle c4 und c5 in dem Zeitschlitz ts3 ausgewählt. Die Markierung eines CDMA-Kodes erfolgt dabei wiederum durch eine binäre eins. Die ausgewählten CDMA-Kodes sind nach der Anzahl und der Lage willkürlich gewählt - eine beispielhafte Markierung von drei CDMA-Kodes in dem Zeitschlitz ts0 und nur eines CDMA-Kodes in dem Zeitschlitz ts3 sind ebenso denkbar. Hierbei gestattet die Erfindung eine sehr flexible Auswahl der gewünschten Parameter.

Die Definition der Anzahl Zeitschlitze ts pro Frequenzkanal fk sowie der Anzahl CDMA-Kodes c pro Zeitschlitz ts durch das SummeZeitschlitze- Nr_ts und das SummeKodes-Sub-Informationselement Nr_c ist bei einer allgemeinen und nicht variierbaren Ausgestaltung der Funkschnittstelle des Funk-Kommunikationssystems obsolet, wodurch vorteilhaft der Signalisierungsaufwand weiter verringert wird.

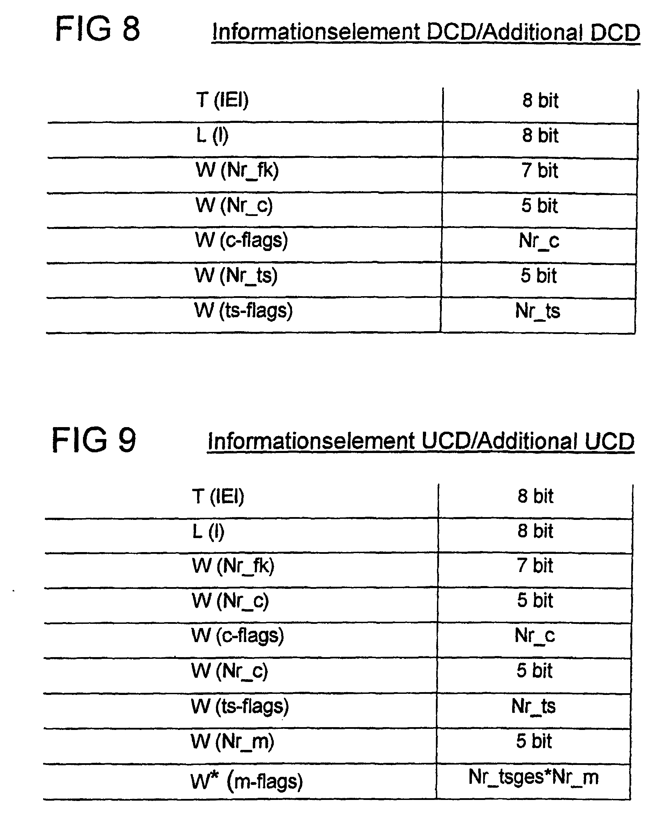

Die in den FIG 8 und 9 dargestellten Informationselemente DCD bzw. UCD in Tabellenform entsprechen den Informationselementen DCD bzw. UCD der FIG 5 und 6, wobei die hierarchische Folge der Sub-Informationselemente verändert ist. In den Informationselementen DCD bzw. UCD der FIG 8 und 9 erfolgt im Anschluß an eine Auswahl eines Frequenzkanals fk durch das Frequenzkanalauswahl-Sub-Informationselement Nr_fk eine Auswahl von CDMA-Kodes c durch das Kodeauswahl-Sub-Informationselement c-flags. Dieses Sub-Informationselement c-flags erscheint im Gegensatz zu den FIG 5 und 6 nur einmal, welches durch die zentrale Auswahl der CDMA-Kodes c begründet ist. Nachfolgend werden den ausgewählten CDMA-Kodes c ein oder mehrere Zeitschlitze ts durch das Zeitschlitzauswahl-Sub-Informationselement ts-flags zugewiesen. Diese Auswahl verringert die Anzahl der Sub-Informationselemente in dem jeweiligen Informationselement DCD bzw. UCD, es muß jedoch sichergestellt sein, daß die ausgewählten CDMA-Kodes c in den jeweils ausgewählten Zeitschlitzen ts zur Verfügung stehen.

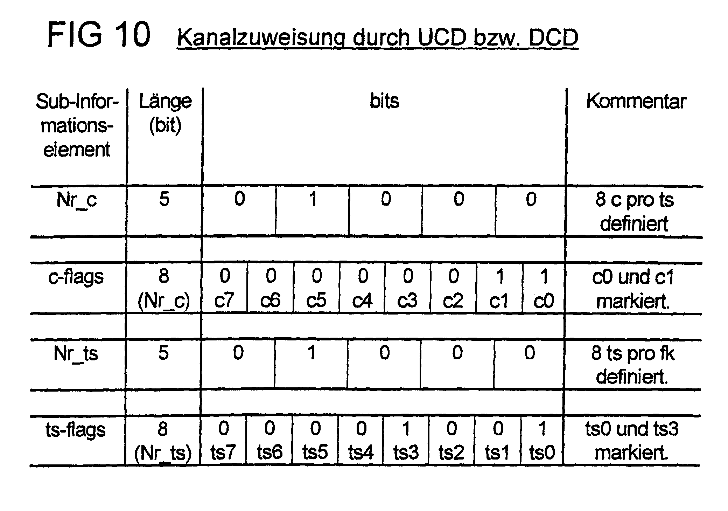

Die FIG 10. stellt eine Kanalzuweisung durch ein Informationselement DCD bzw. UCD dar, wobei die Zuweisung nach der in der Erläuterung zu den FIG 8 und 9 beschriebenen Abfolge erfolgt. Nach der Auswahl eines Frequenzkanals fk durch ein nicht dargestelltes Frequenzkanalauswahl-Sub-Informationselement Nr_fk erfolgt in der ersten Zeile der Tabelle eine Definition der Anzahl CDMA-Kodes c pro Zeitschlitz ts. Die beispielhaft angegebene Bitfolge ergibt eine Anzahl von 8 CDMA-Kodes c0 bis c7 pro Zeitschlitz ts. In der zweiten Zeile der Tabelle werden durch das Kodeauswahl-Sub-Informationselement c-flags die CDMA-Kodes c0 und c1 ausgewählt, wobei die Auswahl durch eine Markierung mittels einer binären 1 erfolgt.

Zu diesen ausgewählten CDMA-Kodes c0 und c1 werden nach der Definition der Anzahl Zeitschlitze ts pro Frequenzkanal fk durch das Summezeitschlitze-Sub-Informationselement Nr_ts in der dritten Zeile nachfolgend in der vierten Zeile der Tabelle die Zeitschlitze ts0 und ts3 ausgewählt. Diese Auswahl der Zeitschlitze ts0 und ts3 erfolgt wiederum durch eine Markierung mittels binärer 1en in der beispielhaft angegebenen Bitfolge. Als Ergebnis der Kanalzuweisung in der FIG 10 sind einer Funkstation MS jeweils die CDMA-Kodes c0 und c1 in den Zeitschlitzen ts0 und ts3 zugewiesen worden, wobei bei diesem Beispiel unerheblich ist, ob die Kanalzuweisung für die Aufwärts- oder Abwärtsrichtung erfolgt.

## Patentansprüche

1. Verfahren zur Kanalzuweisung in einem Funk-Kommunikationssystem, das
ein TD/CDMA-Teilnehmerseparierungsverfahren nutzt,
bei dem
- einer Funkstation (MS) in einer Signalisierungs-Nachricht (AC) die Zuweisung von zumindest einem Kanal aus einer Summe von verfügbaren Kanälen durch ein Informationselement (UCD, DCD) signalisiert wird,
- in dem Informationselement (UCD, DCD) zumindest ein Zeitschlitz (ts) aus einer festgelegten Summe von Zeitschlitzen (ts) durch ein Zeitschlitzauswahl-Sub-Informationselement (ts-flags) ausgewählt wird, und
- in dem Informationselement (UCD, DCD) nachfolgend zumindest ein CDMA-Kode (c) aus einer festgelegten Summe von CDMA-Kodes (c) durch ein Kodeauswahl-Sub-Informationselement (c-flags) für jeden ausgewählten Zeitschlitz (ts) ausgewählt wird, wobei die Anzahl der Kodeauswahl-Sub-Infomationselemente (c-flags) zur Auswahl der CDMA-Kodes (c) der Anzahl der ausgewählten Zeitschlitze (ts) entspricht.

2. Verfahren zur Kanalzuweisung in einem Funk-Kommunikationssystem, das
ein TD/CDMA-Teilnehmerseparierungsverfahren nutzt,
bei dem
- einer Funkstation (MS) in einer Signalisierungs-Nachricht (AC) die Zuweisung von zumindest einem Kanal aus einer Summe von verfügbaren Kanälen durch ein Informationselement (UCD, DCD) signalisiert wird,
- in dem Informationselement (UCD, DCD) zumindest ein CDMA-Kode (c) aus einer festgelegten Summe von CDMA-Kodes (c) durch ein Kodeauswahl-Sub-Informationselement (c-flags) ausgewählt wird, und
- in dem Informationselement (UCD, DCD) nachfolgend zumindest ein Zeitschlitz (ts) aus einer festgelegten Summe von Zeitschlitzen (ts) durch ein Zeitschlitzauswahl-Sub-Informationselement (ts-flags) ausgewählt wird, wobei die ausgewählten CDMA-Kodes (c) in jedem ausgewählten Zeitschlitz (ts) benutzt werden.

3. Verfahren nach Anspruch 1 oder 2, bei dem
in dem Informationselement (UCD, DCD) zusätzlich ein Frequenzkanal (fk) für die Aufwärts- bzw. Abwärtsrichtung aus einer Summe von Frequenzkanälen (fk) durch ein Frequenzkanalauswahl-Sub-Informationselement (Nr_fk) ausgewählt wird, wobei die Auswahl der Zeitschlitze (ts) auf den ausgewählten Frequenzkanal (fk) bezogen ist.

4. Verfahren nach Anspruch 3, bei dem
der Funkstation (MS) in der Signalisierungs-Nachricht (AC) die Zuweisung zusätzlicher Kanäle in zumindest einem weiteren Frequenzkanal (fk) durch ein zusätzliches Informationselement (Additional UCD, Additional DCD) für jeden zusätzlichen Frequenzkanal (fk) signalisiert wird, wobei der Aufbau des zusätzlichen Informationselementes (Additional UCD, Additional DCD) dem des Informationselementes (UCD, DCD) entspricht.

5. Verfahren nach einem der vorhergehenden Ansprüche, bei dem in dem Informationselement (UCD, DCD) die Summe der Zeitschlitze (ts) durch ein SummeZeitschlitze-Sub-Informationselement (Nr_ts) und/oder die Summe der CDMA-Kodes (c) für einen Zeitschlitz (ts) durch ein SummeKodes-Sub-Informationselement (Nr_c) angegeben wird.

6. Verfahren nach einem der vorhergehenden Ansprüche, bei dem
- in dem Informationselement (UCD) die Summe der Mittambeln (m) für die Aufwärtsrichtung durch ein SummeMittambeln-Sub-Informationselement (Nr_m) angegeben wird, und
- nachfolgend für jeden ausgewählten Zeitschlitz (ts) eine Mittambel (m) aus der Summe der Mittambeln (m) durch jeweils ein Mittambelauswahl-Sub-Informationselement (m-flags) ausgewählt wird.

7. Verfahren nach einem der vorhergehenden Ansprüche, bei dem von der Funkstation (MS) aus einer Länge (l) des Informationselementes (UCD, DCD) die Anzahl der zuzuweisenden Kanäle ermittelt wird.

8. Verfahren nach Anspruch 7, bei dem
der Funkstation (MS) die Länge (l) des Informationselementes (UCD, DCD) durch ein Längenfeld (L) in dem Informationselement (UCD, DCD) mitgeteilt wird.

9. Verfahren nach einem der vorhergehenden Ansprüche, bei dem der Funkstation (MS) die Zuweisung der Kanäle für die Aufwärtsrichtung und für die Abwärtsrichtung unabhängig voneinander in der Signalisierungs-Nachricht (AC) signalisiert werden.

10. Verfahren nach einem der vorhergehenden Ansprüche, bei dem
ein Kanal als eine Kombination aus einem Frequenzkanal (fk) oder einer Frequenzsprungsequenz, einem Zeitschlitz (ts) oder einer Zeitschlitzsprungsequenz, und einem CDMA-Kode (c) oder einer CDMA-Kode-Sprungsequenz definiert wird.

11. Verfahren nach einem der vorhergehenden Ansprüche, bei dem
der Funkstation (MS) zusätzlich eine Spezifizierung der Eigenschaften der Kanäle, insbesondere der Modulationsart und/oder des Trägerdienstes, durch ein zusätzliches Informationselement (CM) in der Signalisierungs-Nachricht (AC) signalisiert wird.

12. Anordnung zur Kanalzuweisung in einem Funk-Kommunikationssystem mit Mitteln zur Ausführung der Verfahrensschritte gemäß dem Patentanspruch 1 oder 2.

## Claims

1. Method for channel assignment in a radio communications system, which
uses a TD/CDMA subscriber separation method, in which
- a radio station (MS) is signalled in a signalling message (AC) the assignment of at least one channel from a number of available channels by means of an information element (UCD, DCD),
- in the information element (UCD, DCD), at least one time slot (ts) is chosen from a defined number of time slots (ts) by means of a time slot selection sub-information element (ts-flags), and
- in the information element (UCD, DCD), at least one CDMA code (c) is then chosen from a defined number of CDMA codes (c) by means of a code selection sub-information element (c-flags) for each selected time slot (ts), with the number of code selection sub-information elements (c-flags) for choosing the CDMA codes (c) corresponding to the number of chosen time slots (ts).

2. Method for channel assignment in a radio communications system, which
uses a TD/CDMA subscriber separation method,
in which
- a radio station (MS) is signalled in a signalling message (AC) the assignment of at least one channel from a number of available channels by means of an information element (UCD, DCD),
- in the information element (UCD, DCD), at least one CDMA code (c) is chosen from a defined number of CDMA codes (c) by means of a code selection sub-information element (c-flags), and
- in the information element (UCD, DCD), at least one time slot (ts) is subsequently chosen from a defined number of time slots (ts) by means of a time slot selection sub-information element (ts-flags), with the chosen CDMA codes (c) being used in each chosen time slot (ts).

3. Method according to Claim 1 or 2, in which
in the information element (UCD, DCD), a frequency channel (fk) for the uplink and downlink directions is also chosen from a number of frequency channels (fk) by means of a frequency channel selection sub-information element (Nr_fk), with the choice of the time slots (ts) being related to the chosen frequency channel (fk).

4. Method according to Claim 3, in which
in the signalling message (AC), the radio station (MS) is signalled the assignment of additional channels in at least one further frequency channel (fk) by means of an additional information element (Additional UCD, Additional DCD) for each additional frequency channel (fk), with the layout of the additional information element (Additional UCD, Additional DCD) corresponding to that of the information element (UCD, DCD).

5. Method according to one of the preceding claims, in which, in the information element (UCD, DCD), the number of time slots (ts) is indicated by a total time slot sub-information element (Nr_ts), and/or the number of CDMA codes (c) for a time slot (ts) is indicated by a total codes sub-information element (Nr_c).

6. Method according to one of the preceding claims, in which
- in the information element (UCD), the number of midambles (m) for the uplink direction is indicated by a total midamble sub-information element (Nr_m), and
- a midamble (m) is subsequently chosen for each chosen time slot (ts), from the number of midambles (m), by means of a respective midamble selection sub-information element (m-flags).

7. Method according to one of the preceding claims, in which the radio station (MS) uses the length (l) of the information element (UCD, DCD) to determine the number of channels to be assigned.

8. Method according to Claim 7, in which
the radio station (MS) is also told the length (l) of the information element (UCD, DCD) by means of a length field (L) in the information element (UCD, DCD).

9. Method according to one of the preceding claims, in which the radio station (MS) is signalled the assignment of the channels for the uplink direction and for the downlink direction independently of one another in the signalling message (AC).

10. Method according to one of the preceding claims, in which
a channel is defined as a combination of a frequency channel (fk) or a frequency hopping sequence, a time slot (ts) or a time slot hopping sequence, and a CDMA code (c) or a CDMA code hopping sequence.

11. Method according to one of the preceding claims, in which
the radio station (MS) is additionally signalled a specification of the characteristics of the channels, in particular the modulation type and/or the carrier service, by means of an additional information element (CM) in the signalling message (AC).

12. Arrangement for channel assignment in a radio communications system having means for carrying out the method steps according to Patent Claim 1 or 2.

## Revendications

1. Procédé pour l'attribution de canaux dans un système de radiocommunication, qui utilise un procédé TD/CDMA de séparation des abonnés,
dans lequel
- l'attribution d'au moins un canal sur un total de canaux disponibles est signalée à une station radio (MS) dans un message de signalisation (AC) grâce à un élément d'information (UCD, DCD),
- au moins un intervalle de temps (ts) est sélectionné sur un total fixé d'intervalles de temps (ts), dans l'élément d'information (UCD, DCD), grâce à un sous-élément d'information "Sélection Intervalle de Temps" (ts-flags), et
- au moins un code CDMA (c) est sélectionné ensuite sur un total fixé de codes CDMA (c), dans l'élément d'information (UCD, DCD), grâce à un sous-élément d'information "Sélection Code" (c-flags) pour chaque intervalle de temps (ts) sélectionné, le nombre de sous-éléments d'information "Sélection Code" (c-flags) qui servent à sélectionner les codes CDMA (c) correspondant au nombre d'intervalles de temps (ts) sélectionnés.

2. Procédé pour l'attribution de canaux dans un système de radiocommunication, qui utilise un procédé TD/CDMA de séparation des abonnés,
dans lequel
- l'attribution d'au moins un canal sur un total de canaux disponibles est signalée à une station radio (MS) dans un message de signalisation (AC) grâce à un élément d'information (UCD, DCD),
- au moins un code CDMA (c) est sélectionné sur un total fixé de codes CDMA (c), dans l'élément d'information (UCD, DCD), grâce à un sous-élément d'information "Sélection Code" (c-flags), et
- au moins un intervalle de temps (ts) est sélectionné ensuite sur un total fixé d'intervalles de temps (ts), dans l'élément d'information (UCD, DCD), grâce à un sous-élément d'information "Sélection Intervalle de Temps" (ts-flags), les codes CDMA (c) sélectionnés étant utilisés dans chaque intervalle de temps (ts) sélectionné.

3. Procédé selon l'une des revendications 1 ou 2, dans lequel un canal fréquentiel (fk) pour le sens ascendant resp. descendant est sélectionné en plus, dans l'élément d'information (UCD, DCD), sur un total de canaux fréquentiels (fk) grâce à un sous-élément d'information "Sélection Canal Fréquentiel" (Nr_fk), la sélection des intervalles de temps (ts) étant en rapport avec le canal fréquentiel (fk) sélectionné.

4. Procédé selon la revendication 3, dans lequel l'attribution de canaux supplémentaires dans au moins un autre canal fréquentiel (fk) est signalée à la station radio (MS) dans le message de signalisation (AC) grâce à un élément d'information supplémentaire (Additional UCD, Additional DCD) pour chaque canal fréquentiel supplémentaire (fk), la structure de l'élément d'information supplémentaire (Additional UCD, Additional DCD) correspondant à celle de l'élément d'information (UCD, DCD).

5. Procédé selon l'une quelconque des revendications précédentes, dans lequel, dans l'élément d'information (UCD, DCD), le total des intervalles de temps (ts) est indiqué par un sous-élément d'information "Total Intervalles de temps" (Nr_ts) et/ou le total des codes CDMA ( c) pour un intervalle de temps (ts) est indiqué par un sous-élément d'information "Total Codes" (Nr_c).

6. Procédé selon l'une quelconque des revendications précédentes, dans lequel,
- le total des séquences d'apprentissage *midamble* (m) pour le sens ascendant est indiqué, dans l'élément d'information (UCD), par un sous-élément d'information "Total *Midambles*" (Nr_m), et
- une séquence d'apprentissage *midamble* (m) est sélectionnée ensuite sur le total des *midambles* (m), pour chaque intervalle de temps (ts) sélectionné, à chaque fois grâce à un sous-élément d'information "Sélection *Midamble*" (m-flags).

7. Procédé selon l'une quelconque des revendications précédentes, dans lequel le nombre de canaux à attribuer est déterminé par la station radio (MS) à partir d'une longueur (I) de l'élément d'information (UCD, DCD).

8. Procédé selon la revendication 7, dans lequel la longueur (I) de l'élément d'information (UCD, DCD) est indiquée à la station radio (MS) par un champ "Longueur" (L) dans l'élément d'information (UCD, DCD).

9. Procédé selon l'une quelconque des revendications précédentes, dans lequel l'attribution des canaux est signalée à la station radio (MS) dans le message de signalisation (AC) de manière indépendante pour le sens ascendant et pour le sens descendant.

10. Procédé selon l'une quelconque des revendications précédentes, dans lequel un canal est défini comme une combinaison entre un canal fréquentiel (fk) ou une séquence de sauts de fréquences, un intervalle de temps (ts) ou une séquence de sauts d'intervalles de temps, et un code CDMA ( c) ou une séquence de sauts de codes CDMA.

11. Procédé selon l'une quelconque des revendications précédentes, dans lequel une spécification des caractéristiques des canaux, notamment du type de modulation et/ou du service support, est signalée, en plus, à la station radio (MS) grâce à un élément d'information supplémentaire (CM) dans le message de signalisation (AC).

12. Dispositif pour l'attribution de canaux dans un système de radiocommunication, comprenant des moyens pour exécuter les étapes du procédé selon la revendication 1 ou 2.
